# EUROPÄISCHE PATENTSCHRIFT

(11) **EP 2 898 239 B1**
(45) Veröffentlichungstag und Bekanntmachung des Hinweises auf die Patenterteilung: **05.05.2021**
(21) Anmeldenummer: 13771082.8
(22) Anmeldetag: 20.09.2013
(51) Int. Cl.: G01F 1/66

(54) **STRANGREGULIERARMATUR**
LINE CONTROL VALVE
ROBINET DE RÉGULATION DE CANALISATION

(30) Priorität: 22.09.2012 DE 102012018792; 19.09.2013 DE 102013218827
(43) Veröffentlichungstag der Anmeldung: 29.07.2015
(73) Patentinhaber: KSB SE & Co. KGaA, 67227 Frankenthal (DE)
(72) Erfinder: PETRY, Benjamin, 67227 Frankenthal (DE); RAUCH, Gregor, 67227 Frankenthal (DE); STOCK, Hans, Georg, 67227 Frankenthal (DE); MANSS, Daniel, 67227 Frankenthal (DE); HANEWALD, Dieter, 67227 Frankenthal (DE); BECK, Ralph, 67227 Frankenthal (DE); SCHMIDT, Katrin, 96450 Coburg (DE); SCHMITT, Martin, 96450 Coburg (DE); TIETZE, Sabrina, 96450 Coburg (DE)
(86) Internationale Anmeldenummer: PCT/EP2013/069550
(87) Internationale Veröffentlichungsnummer: WO 2014/044787

(56) Entgegenhaltungen:
- EP-A2- 1 391 646
- WO-A1-96/06295
- WO-A1-2012/052989
- WO-A2-2010/145762
- DE-A1-102004 027 330
- DE-A1-102008 055 030
- US-A1- 2009 133 506
- US-A1- 2009 240 453

## Beschreibung

Die Erfindung betrifft eine Armatur mit einem Gehäuse, in dem ein Absperrkörper angeordnet ist, und einer Einrichtung zur Durchflussmessung.

Armaturen lassen sich nach unterschiedlichen Kriterien einteilen. Eine Möglichkeit der Einteilung besteht bezüglich ihrer jeweiligen Anwendung. Strangregulierarmaturen dienen zum Absperren und Regulieren einzelner Leitungsabschnitte in einem Rohrleitungsnetz und ermöglichen einen hydraulischen Abgleich. Der dabei eingesetzte Absperrkörper ermöglicht sowohl ein Öffnen und Schließen, also Schalten, als auch eine Regulierung des Volumenstroms, also Stellen. Daher wird ein solcher Absperrkörper auch als kombinierter Absperr- und Drosselkörper bezeichnet.

Ein hydraulischer Abgleich ist notwendig, um im gesamten Rohrleitungsnetz definierte Druckverluste herzustellen, damit alle Stellen im Netz mit dem notwendigen Volumenstrom versorgt werden.

Rohrleitungssysteme verteilen das Fördermedium an die einzelnen Verbraucher innerhalb eines Gebäudes bzw. einer Anlage. Die Verbraucher, beispielsweise Wärmetauscher, sollen dabei optimal versorgt werden, wobei insbesondere eine Unter- bzw. Überversorgung vermieden werden soll. Hierzu müssen die einzelnen Rohrleitungsstränge entsprechend reguliert werden. Dafür sind spezielle Armaturen erforderlich, sogenannte Strangregulierarmaturen.

Bei herkömmlichen Strangregulierarmaturen wird mit Hilfe extra anzuschließender Messgeräte der Durchfluss eines nachgeordneten Anlagenteils gemessen. Der Anlagenteil weist einen definierten Zustand auf. Bei einer Heizungsanlage ist das gewöhnlich der Betriebszustand, bei dem im Auslegungsfall (100% Volllastfall), die für diesen Anlagenteil berechnete maximale Energiemenge hindurchfließen muss. Da zwischen der Berechnung eines solchen Anlagenteils und dem tatsächlich gebauten System im Allgemeinen Abweichungen bestehen, erfolgt während einer Inbetriebnahme ein so genannter hydraulischer Abgleich. Zu diesem Zweck wird mit Hilfe einer Strangregulierarmatur derjenige Volumenstrom fest eingestellt, wie er bei der Auslegung einer Anlage für den Auslegungsfall berechnet wurde. Für den Einreguliervorgang eines solchen Rohrleitungsstranges muss an der Strangregulierarmatur der gemessene Volumenstrom, im Allgemeinen mit Hilfe einer örtlichen Differenzdruckmessung, erfasst und korrigiert werden. Ein mit diesen Mitteln durchgeführter Mess- und Reguliervorgang ist sehr zeitaufwendig.

Die DE 197 25 376 A1 beschreibt eine verbesserte Strangregulierarmatur, mit deren Hilfe ein Strangabgleich erleichtert wird. Dazu finden ein elektronischer Volumenstromsensor und ein Datenspeicher mit spezifischen Kennwerten der Strangregulierarmatur Verwendung. Der Sensor ist auf der Zuströmseite in den Flansch des Gehäuses integriert und arbeitet nach dem kalorischen Messprinzip.

Auch in der DE 103 05 889 A1 wird eine Strangregulierarmatur mit einer einen Sensor aufweisenden Messeinrichtung zur Volumenstrommessung des Mediums beschrieben. Der Sensor ist in eine im Gehäuse vorgesehene Kammer eingesetzt.

Im Gegensatz zu den zuvor beschriebenen gattungsgemäßen Armaturen ist mit dem in der EP 2 450 675 A2 bzw. der WO 2012/052989 A1 beschriebenen Membranventil keine Strangregulierung möglich. Dieses Membranventil wird als Verschlusseinrichtung eines Wasserzählers eingesetzt.

Herkömmliche Strangregulierarmaturen mit einer Einrichtung zur Durchflussmessung, wie gemäß der EP 1 391 646 A2, weisen Grenzen bezüglich der Genauigkeit des Messverfahrens auf.

Die US 2009/0240453 A1 zeigt ein Ultraschall-Durchflussmessgerät, bei dem in Durchgangsbohrungen angeordnete mediumsberührende Ultraschallsensoren akustische Signale direkt in den zu messenden Flüssigkeitsstrom einbringen.

Die DE 10 2008 055 030 A1 offenbart ein Messrohr eines Ultraschall-Durchfluss-Messsystems mit Ultraschallsensoren, die in einer Vertiefung eines Vorsprungs am Messrohr angeordnet sind.

Die US 2009/0133506 A1 zeigt ein weiteres Ultraschall-Durchflussmessgerät.

Aufgabe der Erfindung ist es, eine Strangregulierarmatur anzugeben, mit der eine möglichst präzise und wenig aufwändige Durchflussmessung ermöglicht wird. Auf diese Weise soll eine schnelle und genaue Strangregulierung gewährleistet werden. Die Armatur soll sich durch eine günstige Strömungscharakteristik auszeichnen. Zudem ist es Ziel, eine möglichst wartungsarme Armatur bereit zu stellen, die zuverlässige Mess-ergebnisse liefert und auf kostengünstige Weise herzustellen ist.

Diese Aufgabe wird erfindungsgemäß dadurch gelöst, dass die Einrichtung einen ersten Ultraschallsensor und mindestens einen weiteren Ultraschallsensor aufweist, die am Gehäuse angeordnet sind.

Die erfindungsgemäße Integration von Ultraschallsensoren in eine Strangregulierarmatur ermöglicht präzise Durchflussmessungen. Somit ist eine schnelle und genaue Einregulierung von Anlagenteilen möglich. Durch den erfindungsgemäßen Einsatz von Ultraschallmesstechnik bei Strangregulierarmaturen kann auf aufwendige herkömmliche Konstruktionen, wie beispielsweise spezielle Anschlüsse für Druckmessleitungen oder dergleichen, verzichtet werden.

Die Integration von nicht-mediumberührenden Ultraschallsensoren in die Strangregulierarmatur ermöglicht, dass aufwendige Gehäusekonstruktionen mit besonderen Messbohrungen und den dadurch bedingten Gefahren beim Anschließen entsprechender Messleitungen entfallen (Austritt von Medium). Stattdessen werden bei der erfindungsgemäßen Armatur an dem Gehäuse Ultraschallsensoren angeordnet. Damit kann ohne Mediumkontakt und ohne störende Einwirkung auf die Strömung der Volumenstrom gemessen werden.

Am Gehäuse der Armatur sind mindestens zwei Ultraschallsensoren angeordnet. Die Integration einer akustischen Durchflussmessung in eine Strangregulierarmatur bietet gegenüber herkömmlichen Messverfahren einige Vorzüge. Die Messung ist weitgehend unabhängig von den Eigenschaften der verwendeten Medien. Zudem verringert das Fehlen beweglicher Teile den Wartungsaufwand. Weiterhin wird die Strömung nicht beeinflusst. So gibt es keinen Druckverlust, beispielsweise durch eine Querschnittsverengung. Weiterhin zählt ein großer Messbereich zu den positiven Eigenschaften.

Vorzugsweise kommt bei der Auswertung der Messsignale ein Laufzeitdifferenzverfahren zur Anwendung. Bei diesen Verfahren werden die unterschiedlichen Laufzeiten der Ultraschallimpulse relativ zur Strömungsrichtung des Mediums von einer Regel-/Auswerteeinheit ausgewertet. Hierzu werden von den Ultraschallsensoren Impulse in einem bestimmten Winkel sowohl mit als auch entgegen der Strömung gesendet. Aus der Laufzeitdifferenz lässt sich die Fließgeschwindigkeit und damit bei bekanntem Durchmesser des Strömungsraums der Armatur der Volumenstrom bzw. über die Dichte des Medium der Massenstrom bestimmen.

Die erfindungsgemäße Strangregulierarmatur ermöglicht die Messung von Durchflussmengen unabhängig von Mindestdifferenzdrücken. Dabei sind auch Permanentmessungen möglich. Mit der Armatur lassen sich sowohl Rohrleitungsstränge absperren als auch die Durchflussmenge regulieren.

Vorzugsweise wird die Laufzeitdifferenz bei dem erfindungsgemäßen Verfahren kontinuierlich als auch kurzzeitig gemessen. Weiterhin lässt sich in dem Verfahren auch das geförderte Medium näher bestimmen oder sogar identifizieren. Dies geschieht über eine Analyse der gemessenen Schallgeschwindigkeit.

Erfindungsgemäß weist das Gehäuse der Armatur Koppelelemente auf. Diese Koppelelemente dienen der Ein- bzw. Auskoppelung der Ultraschallsignale, die von den Sensoren ausgesendet bzw. empfangen werden. Erfindungsgemäß ist dazu das Gehäuse der Strangregulierarmatur mit speziellen Koppelelementen ausgestattet.

Die Ultraschallsensoren umfassen mindestens ein elektromechanisches Wandlerelement. Vorzugsweise handelt es sich dabei um ein piezoelektrisches Element. In diesem elektromechanischen Wandlerelement werden die Ultraschallwellen erzeugt und über das Koppelelement des Gehäuses in das Strömungsmedium geleitet. Das Koppelelement des Gehäuses weist eine Einkoppelfläche auf, auf welcher mindestens ein piezoelektrischer Ultraschallwandler angebracht ist. Der piezoelektrische Ultraschallwandler erzeugt eine akustische Welle, die in das Koppelelement geleitet wird.

Weiterhin ist es von Vorteil, wenn die Ultraschallsensoren Mittel aufweisen, um diese an den Koppelelementen abnehmbar zu befestigen. Dazu können die Ultraschallsensoren innerhalb ihres Gehäuses einen Magneten aufweisen und/oder können die Ultraschallsensoren eine im Randbereich ihres Gehäuses vorstehende Gehäusekontur aufweisen, die die Koppelelemente zu umschließen vermag.

Bei einer erfindungsgemäßen Ausführung der Erfindung sind die Koppelelemente als Vorsprünge am Gehäuse ausgebildet. Es handelt sich dabei um eine Materialanhäufung gegenüber einer herkömmlichen Gehäuseform ohne Messeinrichtung. Alternativ sind erfindungsgemäß Vertiefungen am Gehäuse vorgesehen, die die Koppelelemente bilden. Zudem können als Vorsprünge ausgebildete Koppelelemente zusätzlich eine innere Vertiefung aufweisen.

Als besonders günstig erweist es sich, wenn die Koppelelemente einstückig mit dem Gehäuse ausgebildet sind. Bei dieser Ausführung werden die Koppelelemente von dem Gehäuse selbst ausgeformt. Da sie aus dem Gehäusematerial bestehen, haben die von den elektromechanischen Wandlern erzeugten Ultraschallwellen eine einheitliche Fortpflanzungsgeschwindigkeit, so dass es zu keiner Brechung an einem Übergang zwischen Koppelelement und Gehäuse kommt.

Zur Herstellung eines Gehäuses aus Guss werden dafür spezielle Formen eingesetzt, welche die als Vorsprünge und/oder Vertiefungen ausgebildeten Koppelelemente als Negativ in der Form abbilden. Somit sind in der Gussform spezielle Ausbuchtungen und/oder Erhebungen für die Koppelelemente vorhanden.

Die von dem Piezokristall erzeugte Ultraschallwelle wird in axialer Richtung durch das Koppelelement bis zu der Grenzfläche zwischen dem Strömungsmedium und dem Gehäuse übertragen. Erst an dieser Stelle findet eine Brechung statt. Durch die Brechung ändert sich die Wellencharakteristik. Der Brechungswinkel hängt von dem Einfallswinkel und von den Relativgeschwindigkeiten der Ultraschallsignale in dem Strömungsmedium bzw. Gehäuse ab.

Die vom Gehäuse gebildeten Koppelelemente weisen Schallkoppelflächen auf. Diese wirken als Einkoppelfläche und/oder Auskoppelfläche für die erzeugten bzw. empfangenen akustischen Signale. An diesen Schallkoppelflächen der Koppelelemente sind die elektromechanischen Wandlerelemente der Ultraschallsensoren angeordnet. Diese können entweder direkt an der Koppelfläche angeordnet sein oder mittels einer oder mehrerer Zwischenschichten mit den Koppelflächen in Kontakt stehen.

Vorzugsweise sind alle Oberflächen im Bereich des Signalverlaufs, insbesondere die Oberfläche des Koppelelements, also die Schallkoppelfläche, unbearbeitet.

Über die Ausrichtung der Schallkoppelflächen wird die Richtung vorgegeben, in der die Ultraschallsignale in das Gehäuse eingeleitet und somit durch das strömende Medium geleitet werden. Bei der Ausrichtung der Flächen ist zu beachten, dass es an der Grenzfläche zwischen dem Gehäusematerial und dem durch die Armatur strömenden Medium zu einer Brechung kommt. Dabei werden die Schallkoppelflächen von miteinander korrespondierenden Koppelelementen so zueinander ausgerichtet, dass die Ultraschallsignale möglichst optimal übertragen werden. Ein guter Empfang zeichnet sich durch eine hohe Signalstärke aus.

Bei der Konstruktion des Gehäuses für die erfindungsgemäße Armatur werden daher spezielle Gussformen eingesetzt, welche die Koppelelemente so ausbilden, dass deren Schallkoppelflächen eine Ausrichtung zueinander haben, die eine Durchflussmessung nach dem Ultraschalllaufzeitdifferenzverfahren mit möglichst guten Signalübertragungen zwischen den Sensoren bei möglichst geringer Leistungsaufnahme ermöglichen.

Erfindungsgemäß sind die Schallkoppelflächen der Koppelelemente schräg zur Strömungsachse ausgerichtet.

Bei der konstruktiven Ausrichtung der Koppelelemente bzw. der Schallkoppelflächen sind vorteilhafterweise neben dem Kriterium einer möglichst guten Signalübertragung in Form einer möglichst optimalen relativen Energieübertragung, also dem Verhältnis von nutzbarem Energieanteil am Empfänger zum Sendesignal, zusätzlich ein oder mehrere armaturentypabhängige Randbedingungen, also Randbedingungen, die sich durch einen Armaturentyp ergeben, wie geometrische Randbedingungen (d.h. Baulänge, insbesondere Normbaulänge, Geometrie der Armatur), Gehäuseart (beispielsweise Gehäusematerial) oder Einsatzbedingungen (beispielsweise zu fördernde Medien), berücksichtigt.

Erfindungsgemäß ist es, wenn zwischen der Vertikalen zu einer Koppelfläche und der Strömungsachse ein Winkel von mehr als 30° und weniger als 40° besteht. Versuche haben gezeigt, dass der Winkel zwischen der Vertikalen zu einer Koppelfläche und der Strömungsachse idealerweise mehr als 30° und weniger als 80°, vorzugsweise weniger als 60° beträgt. Dieser Winkel wird nachfolgend auch Keilwinkel genannt. Unter der Strömungsachse wird die Hauptachse der Armatur, genauer die Strömungsachse im Messbereich, also der Bereich zwischen den Koppelelementen, verstanden. Erfindungsgemäß wird der genaue Winkel in Abhängigkeit von dem Gehäusewerkstoff, der Bauteilgeometrie sowie der Durchstrahlungskonfiguration ermittelt.

Bei einer Variante der Erfindung sind die Schallkoppelflächen von Koppelelemente an einander gegenüberliegenden Außenseiten des Gehäuses angeordnet, so dass sich ein sogenannte Z-Konfiguration oder eine Dreifachdurchstrahlungs-Konfiguration ergibt. Dabei sind die Ebenen der Schallkoppelflächen der Koppelelemente parallel zueinander ausgerichtet. Dabei sind die Schallkoppelfächen der Koppelelemente idealerweise versetzt zueinander angeordnet.

Bei weiteren möglichen Konfigurationen, wie beispielsweise V- und W-Konfiguration, liegen die Koppelelemente auf derselben Seite des Gehäuses. Die Ebenen der Schallkoppelflächen schneiden sich bei diesen Konfigurationen in einem vom Einstrahlungswinkel abhängigen Winkel.

Überraschenderweise hat sich gezeigt, dass auch bei Verwendung einer kostengünstigen Sensorik und Messtechnik jede der oben genannten Konfigurationen für jede gängige Nennweite einer Strangregulierarmatur verwendbar ist.

Bei einer besonders vorteilhaften Ausführung der Erfindung weist das einstückig ausgebildete Gehäuse zwei einander gegenüber liegende Anschlusselemente auf. Diese können beispielsweise als Flansche ausgebildet sein. Alternativ können alle gängigen Anschlusselemente, wie beispielsweise Schraub- oder Schweißenden, eingesetzt werden. Sie dienen dem Einbau der Armatur in ein Rohrleitungssystem. Über die Anschlusselemente, wird die Armatur mit den benachbarten Rohrleitungsstücken verbunden.

Das einstückig ausgebildete Gehäuse der Armatur weist vorzugsweise einen Gehäusehals auf, in dem die Teile, welche den Absperrkörper verschieben, angeordnet sind.

Eine weitere Einflussgröße, um möglichst gute Messergebnisse zu erzielen, ist die Länge der Messstrecke zwischen den Ultraschallsensoren.

Bei einer besonders günstigen Ausführung der Erfindung ist der Gehäusehals asymmetrisch zwischen den Anschlusselementen angeordnet. Durch die asymmetrische Anordnung des Gehäusehalses mit der entsprechenden Bewegungseinheit, wie beispielsweise Spindel, Kegel, Handrad usw., ergibt sich eine größere Messstrecke. Aus der Länge der Messstrecke und den zur Gehäusekonstruktion eingesetzten Materialien lässt sich ein optimaler Durchstrahlungswinkel berechnen. Auf Grundlage dieses berechneten Strahlungswinkels wird bei der Konstruktion der Armatur die Gussform so gestaltet, dass die Schallkoppelflächen der Koppelelemente eine optimale Ausrichtung zueinander haben.

Vorteilhafterweise ist die Position und/oder die Ausrichtung und/oder die Größe der Koppelelemente für mehrere verschiedene Medien ausgelegt. Für eine solche Mediengruppe sind zweckmäßigerweise die Koppelelemente am Armaturengehäuse derart angeordnet und/oder sind die Keilwinkel der Koppelelemente und/oder die Größe der Koppelelemente derart gewählt, dass die Signalpfade der ausgesendeten Ultraschallsignale, insbesondere die neutralen Fasern als die geometrischen Mittelpunktlinien der Signalpfade, bei den jeweiligen Medien jeweils auf die Schallkoppelflächen der Koppelelemente bzw. die Detektionsflächen der Sensoren auftreffen. Dadurch ist eine für eine bestimmte Armaturengröße definierte Koppelelementeanordnung gleichzeitig für mehrere Strömungsmedien ohne Änderung der Koppelelement- sowie Sensoranordnung einsetzbar. Insbesondere sind die Koppelelemente derart angeordnet und/oder dimensioniert, dass die neutrale Faser des Signalverlaufs eines ausgesendeten Ultraschallsignals für ein fiktives Medium mit einer über die Schallgeschwindigkeiten der Medien einer Mediengruppe gemittelten, gegebenenfalls gewichtet gemittelten, Schallgeschwindigkeit mittig auf die Schallkoppelflächen der Koppelelemente auftrifft.

Das Verfahren zur Bestimmung und/oder Überwachung des Durchflusses des Mediums durch die Strangregulierarmatur umfasst folgende Schritte:
- Erzeugung von Ultraschallsignalen mittels eines ersten Ultraschallsensors,
- Einleitung der Ultraschallsignale in das Gehäuse über Koppelelemente des Gehäuses,
- Fortpflanzung der Ultraschallsignale innerhalb der Gehäusekoppelelemente,
- Fortpflanzung der Ultraschallsignale in dem Strömungsmedium,
- Fortpflanzung der Ultraschallsignale in einem weiteren Koppelelement des Gehäuses,
- Empfang der Ultraschallsignale von einem weiteren Ultraschallsensor, der an dem weiteren Koppelelement des Gehäuses angeordnet ist,
- Auswertung der Signale mittels einer Regel-/Auswerteeinheit.
- Aussenden eines zweiten Signals in die entgegengesetzte Richtung
- Die Auswerteeinheit bildet die Laufzeitdifferenz aus beiden Signalen und berechnet anhand der Durchströmungsgeometrie den Volumenstrom

Weitere Merkmale und Vorteile der Erfindung ergeben sich aus der Beschreibung eines Ausführungsbeispiels anhand von Zeichnungen und aus den Zeichnungen selbst.

### Dabei zeigt

- Fig. 1: einen perspektivischen Vertikalschnitt durch die Armatur,
- Fig. 2: einen Horizontalschnitt des Gehäuses,
- Fig. 3: einen Horizontalschnitt des Gehäuses mit Ultraschallsensoren,
- Fig. 4: eine Darstellung der relativen Energieübertragung über verschiedene Keilwinkel,
- Fig. 5: Signalverläufe durch eine Armatur für verschiedene Medien.

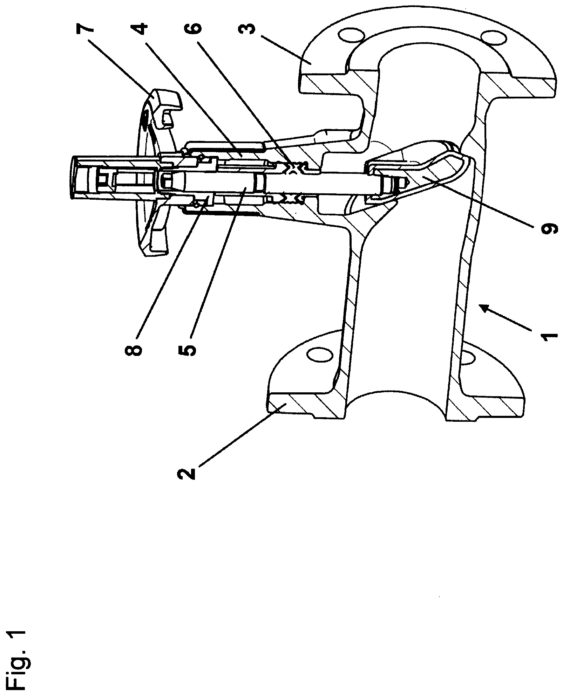

Fig. 1 zeigt einen perspektivischen Vertikalschnitt durch die Strangregulierarmatur. Die Armatur umfasst ein metallisches Gehäuse 1. Das Gehäuse 1 ist als einteilige Gusskonstruktion ausgebildet. Es umfasst Anschlusselemente 2, 3 die im Ausführungsbeispiel als Flansche ausgebildet sind.

Weiterhin umfasst das einstückig ausgebildete Gehäuse 1 einen Gehäusehals 4. Im Gehäusehals 4 ist eine nicht drehende Spindel 5 angeordnet

Bei der im Ausführungsbeispiel dargestellten Strangregulierarmatur handelt es sich um ein Hubventil. Der Sitz des Ventils ist schräg zur Durchströmrichtung ausgebildet. An der Spindel 5 liegt eine ein- oder mehrteilige Spindelabdichtung 6 an, die eine Abdichtung zwischen dem Gehäuseinnern und der Atmosphäre sicherstellt.

Eine drehbar im Gehäusehals 4 gelagerte von einem Handrad 7 bewegte Spindelmutter 8 bewirkt das Heben und Senken der Spindel 5.

An der Spindel 5 ist ein Absperrkörper 9 angeordnet. Bei dem Absperrkörper 9 handelt es sich im Ausführungsbeispiel um einen Drosselkegel. Der Absperrkörper 9 weist einen weichdichtenden Überzug auf.

Der Gehäusehals 4 ist asymmetrisch zwischen den beiden Anschlusselementen 2, 3 angeordnet. Mit Blick auf die Zeichnung wird die Armatur von links nach rechts durchströmt. Durch die asymmetrische Anordnung des Gehäusehalses 4 ist der Abstand zwischen dem Anschlusselement 2 und dem Gehäusehals 4 größer als zwischen dem Anschlusselement 3 und dem Gehäusehals 4.

Der Messbereich weist im Wesentlichen eine kreisförmige innere Querschnittsfläche auf. Somit erfolgt im Messbereich keine Querschnittsveränderung bzw. negative Strömungsbeeinflussung.

Erfindungsgemäß wird die in die Armatur integrierte Einrichtung zur Durchflussmessung im Bereich zwischen dem Anschlusselement 2 und dem Gehäusehals 4 angeordnet. Dadurch ergibt sich eine größere Messstrecke. Je größer die Messstrecke ist, desto größer ist der Messbereich. Somit ermöglicht die asymmetrische Anordnung des Gehäusehalses 4 zwischen den Anschlusselementen 2, 3 genauere Messergebnisse.

In diesem Ausführungsbeispiel ist das Gehäuse als einteilige Gehäusekonstruktion ausgebildet. Im Rahmen der Erfindung liegen auch Strangregulierventile mit einem mehrteiligen Gehäuse.

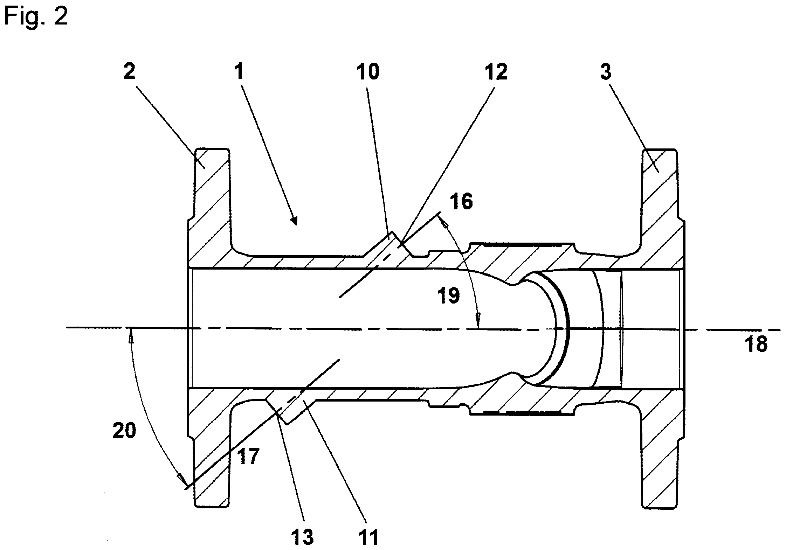

Fig. 2 zeigt einen horizontalen Schnitt durch das Gehäuse 1. Das Gehäuse 1 der Armatur weist zwei Koppelelemente 10, 11 auf, die an einander gegenüberliegenden Seiten des Gehäuses 1 angeordnet sind. Die Koppelelemente 10, 11 sind einstückig mit dem Gehäuse 1 ausgebildet. Sie werden von dem Gehäuse als Vorsprünge ausgeformt. Bei den Koppelelementen 10, 11 handelt es sich um Materialanhäufungen, die am Gehäuse 1 ausgebildet sind. Jedes Koppelelement 10, 11 weist eine Schallkoppelfläche 12, 13 auf. Die Schallkoppelflächen 12, 13 dienen als Einkoppel- bzw. Auskoppelflächen für die akustischen Signale.

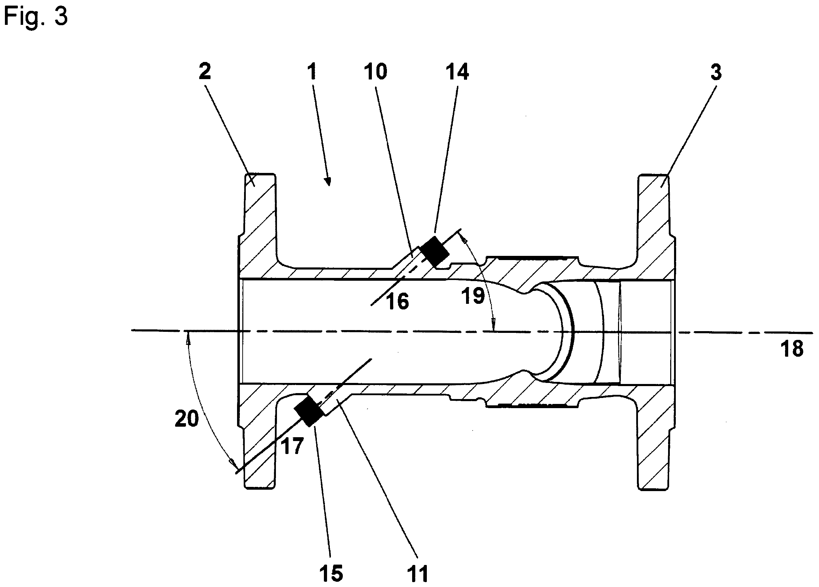

Fig. 3 zeigt einen Horizontalschnitt des Gehäuses mit Ultraschallsensoren 14, 15, die an den Koppelelementen 10, 11 des Gehäuses 1 angeordnet sind. Die Ultraschallsensoren 14, 15 erzeugen Ultraschallsignale. Jeder Ultraschallsensor 14, 15 weist einen elektromechanischen Wandler auf, der elektrische Signale in Ultraschallsignale umwandelt und umgekehrt.

Bei der Durchflussmessung erzeugt der Ultraschallsensor 14 Ultraschallwellen, die über die Schallkoppelfläche 12 in das Koppelelement 10 des Gehäuses 1 eingeleitet werden. Die Ultraschallsignale pflanzen sich innerhalb des Koppelelements 10 fort und treffen dann auf das Medium, welches durch den Strömungsraum des Gehäuses 1 strömt.

An dem Phasenübergang zwischen Gehäuse 1 und Medium kommt es zu einer Brechung. Die Ultraschallsignale laufen durch das Medium und treffen dann auf das Koppelelement 11 des Gehäuses 1. Nun pflanzen sich die Ultraschallwellen im Koppelelement 11 des Gehäuses 1 fort und werden über die Schallkoppelfläche 13 des Koppelelements 11 ausgekoppelt und vom Ultraschallsensor 15 empfangen. Entsprechend wird vom zweiten Ultraschallsensor 15 ein zweites Signal in die entgegengesetzte Richtung ausgesendet. Die Auswerteeinheit bildet die Laufzeitdifferenz aus beiden Signalen und berechnet anhand der Durchströmungsgeometrie den Volumenstrom.

Ein elektromagnetischer Wandler im Ultraschallsensor 15 wandelt die akustischen Wellen in elektrische Signale um. Die Signale werden von einer Regel-/Auswerteeinheit erfasst und entweder direkt ausgewertet bzw. zuvor von einem Messumformer in andere Signale umgewandelt. Anhand der Ultraschallmesssignale bzw. anhand von Messdaten, welche aus den Ultraschallmesssignalen abgeleitet werden, ermittelt die Regel-/Auswerteeinheit den Volumen- und/oder den Massestrom, der durch die Strangregulierarmatur fließt, mittels eines Laufzeitdifferenzverfahrens.

Im Ausführungsbeispiel beträgt der Winkel 19 zwischen der Vertikalen 16 der Schallkoppelfläche 12 zur Strömungsachse 18 fünfunddreißig Grad. Ebenso beträgt der Winkel 20 zwischen der Vertikalen 17 der Schallkoppelfläche 13 zur Strömungsachse 18 fünfunddreißig Grad. Die Winkel 19, 20 sind so abgestimmt, dass bei dem für das Gehäuse 1 ausgewählte Material und der Anordnung der beiden Koppelelemente 10, 11 zueinander eine optimale Signalübertragung zwischen den beiden Ultraschallsensoren 14, 15 erfolgt.

Im Ausführungsbeispiel wird die Messstrecke in der sogenannten Z-Konfiguration durchstrahlt. Dies bedeutet, dass sich die Koppelelemente 10, 11 gegenüberliegen.

Bei weiteren möglichen Konfigurationen, wie beispielsweise V- und W-Konfiguration, liegen die Koppelelemente 10, 11 auf derselben Seite des Gehäuses 1.

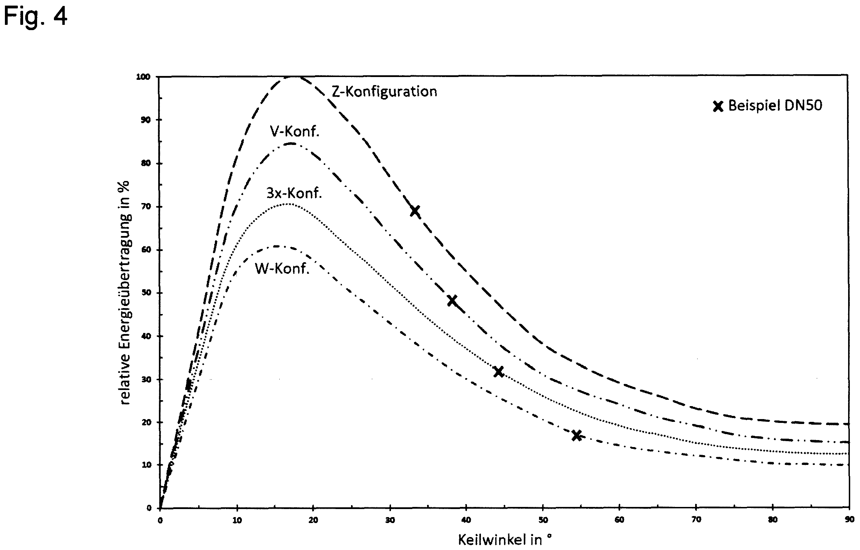

Fig. 4 zeigt beispielhaft für eine Armatur mit Nennweite DN 50 für verschiedene Durchschallungskonfigurationen (Z-Konfiguration, V-Konfiguration, Dreimal-Durchgang-Konfiguration, W-Konfiguration) die relative Energieübertragung in Abhängigkeit verschiedener Keilwinkel, also der Winkel zwischen der Vertikalen zu einer Koppelfläche und der Strömungsachse. Die in Abhängigkeit der Baulänge, insbesondere Normbaulänge, der Armatur und der damit begrenzten Länge des Messbereichs, des Gehäusematerials und der betrachteten Mediengruppe vorgeschlagenen und in der Fig. 4 jeweils mittels Kreuz markierte Keilwinkel entsprechen hier nicht den Keilwinkeln mit maximaler Energieübertragung, sondern liegen bei vergleichsweise größeren Keilwinkeln, hier in einem Bereich von 30 bis 60°. Dadurch ist eine optimale Energieübertragung bei gleichzeitiger Berücksichtigung der armaturentypischen Randbedingungen, insbesondere der begrenzten möglichen Messstreckenlänge, gewährleistet.

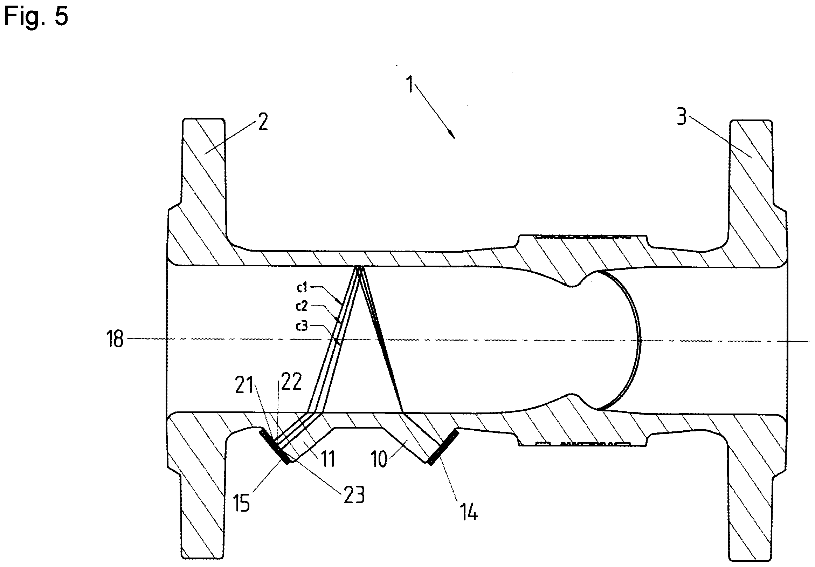

Fig. 5 zeigt mögliche Signalverläufe durch eine Armatur für verschiedene Medien bei einer V-Konfiguration. Vom Ultraschallsensor 14 ausgesendete Ultraschallsignale werden beim Eintritt in das Medium gebrochen. Der Brechungswinkel ist dabei mediumsabhängig und ergibt sich aus dem Brechungsgesetz. Nach Reflexion des Ultraschallsignals an der gegenüberliegenden Gehäusewand wird das Ultraschallsignal beim Eintritt in das Gehäusematerial erneut gebrochen und durch das Gehäusematerial zum Ultraschallempfänger 15 geleitet. In diesem Ausführungsbeispiel sind jeweils die neutralen Fasern, also die Signalmittelpunktlinien der Ultraschallsignalverläufe, dargestellt und berücksichtigt. Es ist erkennbar, dass der dargestellte Signalpfad für ein Medium mit kleinerer Schallgeschwindigkeit c3 und der dargestellte Signalpfad für ein Medium mit größerer Schallgeschwindigkeit c1 an unterschiedlichen Stellen 23, 21 der Schallkoppellfläche 13 bzw. des Ultraschallempfängers 15 auftreffen. Die Anordnung, Ausrichtung und Größe der Koppelelemente 10, 11 ist dabei so gewählt, dass beide Signalpfade vom Ultraschallempfänger 15 detektiert werden können. Dabei sind die Koppelelemente 10, 11 auf einen Signalpfad eines fiktiven Mediums mit mittlerer Schallgeschwindigkeit c2, also der gemittelten Schallgeschwindigkeit der betrachteten Medien, justiert. Der Signalpfad des vom Ultraschallsensor 14 ausgesendeten Signals trifft für dieses fiktive Medium an der Stelle 22 mittig auf die Schallkoppelfläche 13 des Koppelelementes 11. So wird erfindungsgemäß sichergestellt, dass die Signale für alle Medien einer betrachteten Mediengruppe bzw. mit deren Schallgeschwindigkeiten auf der detektierbaren Sensorfläche auftreffen und detektiert werden können.

## Patentansprüche

1. Armatur mit einem Gehäuse (1), in dem ein Absperrkörper (9) angeordnet ist, und einer Einrichtung zur Durchflussmessung, wobei die Einrichtung einen ersten Ultraschallsensor (14) und mindestens einen weiteren Ultraschallsensor (15) aufweist, die am Gehäuse (1) angeordnet sind,
**dadurch gekennzeichnet, dass**
die Armatur eine Strangregulierarmatur ist und die Ultraschallsensoren (14, 15) an als Vorsprung, Vertiefung oder Vorsprung, der eine innere Vertiefung aufweist, am Gehäuse (1) ausgebildeten Koppelelementen (10, 11) angeordnet sind, wobei die Koppelelemente (10, 11) Schallkoppelflächen (12, 13) aufweisen, wobei die Schallkoppelfläche (12, 13) mindestens eines Koppelelements (10, 11) schräg zur Strömungsachse (18) ausgerichtet ist, wobei zwischen den Normalen (16, 17) der Schallkoppelflächen (12, 13) und der Strömungsachse (18) ein Winkel (19, 20) von mehr als 30° und weniger als 40° besteht.

2. Strangregulierarmatur nach Anspruch 1, **dadurch gekennzeichnet, dass** das Koppelelement (10, 11) einstückig mit dem Gehäuse (1) ausgebildet ist.

3. Strangregulierarmatur nach einem der Ansprüche 1 bis 2, **dadurch gekennzeichnet, dass** Schallkoppelflächen (12, 13) von Koppelelementen (10, 11) an einander gegenüberliegenden Außenseiten des Gehäuses (1) angeordnet sind.

4. Strangregulierarmatur nach Anspruch 3, **dadurch gekennzeichnet, dass** Ebenen von Schallkoppelflächen (12, 13) von Koppelelementen (10, 11) parallel zueinander angeordnet sind.

5. Strangregulierarmatur nach Anspruch 3 oder 4, **dadurch gekennzeichnet, dass** Schallkoppelfächen (12, 13) von Koppelelementen (10, 11) versetzt zueinander angeordnet sind.

6. Strangregulierarmatur nach einem der Ansprüche 1 bis 2, **dadurch gekennzeichnet, dass** Schallkoppelflächen (12, 13) von Koppelelementen (10, 11) auf derselben Seite des Gehäuses (1) liegen.

7. Strangregulierarmatur nach Anspruch 6, **dadurch gekennzeichnet, dass** Ebenen von Schallkoppelflächen (12, 13) von Koppelelementen (10, 11) sich in einem vom Einstrahlungswinkel abhängigen Winkel schneiden.

8. Strangregulierarmatur nach einem der Ansprüche 1 bis 7, **dadurch gekennzeichnet, dass** das Gehäuse (1) Anschlusselemente (2, 3) aufweist.

9. Strangregulierarmatur nach einem der Ansprüche 1 bis 8, **dadurch gekennzeichnet, dass** das Gehäuse (1) einen Gehäusehals (4) aufweist.

10. Strangregulierarmatur nach Anspruch 8 und 9, **dadurch gekennzeichnet, dass** der Gehäusehals (4) asymmetrisch zwischen den Anschlusselementen (2, 3) angeordnet ist.

11. Verfahren zur Bestimmung und/oder Überwachung des Durchflusses eines Mediums in einer Strangregulierarmatur gemäß einem der Ansprüche 1 bis 10,
wobei
die vom ersten Ultraschallsensor (14) durch das Medium gesendeten Ultraschallsignale vom weiteren Ultraschallsensor (15) empfangen werden und die vom weiteren Ultraschallsensor (15) durch das Medium gesendeten Ultraschallsignale vom ersten Ultraschallsensor (14) empfangen werden, wobei die Signale mit mindestens einer Regel-/Auswerteeinheit ausgewertet werden, welche den Volumen- und/oder Massestrom des Mediums in der Strangregulierarmatur ermittelt.

## Claims

1. Valve having a housing (1) in which a shut-off body (9) is arranged, and having a device for flow rate measurement, wherein the device has a first ultrasound sensor (14) and at least one further ultrasound sensor (15), which are arranged on the housing (1),
**characterized in that**
the valve is a line control valve, and the ultrasound sensors (14, 15) are arranged at coupling elements (10, 11), said coupling elements being formed at the housing (1) as a projection, depression or projection having an inner depression, wherein the coupling elements (10, 11) have sound coupling surfaces (12, 13), wherein the sound coupling surface (12, 13) of at least one coupling element (10, 11) is oriented obliquely with respect to the flow axis (18), wherein there is an angle (19, 20) of greater than 30° and less than 40° between the normals (16, 17) of the sound coupling surfaces (12, 13) and the flow axis (18).

2. Line control valve according to Claim 1, **characterized in that** the coupling element (10, 11) is formed integrally with the housing (1).

3. Line control valve according to either of Claims 1 and 2, **characterized in that** sound coupling surfaces (12, 13) of coupling elements (10, 11) are arranged on mutually opposite outer sides of the housing (1).

4. Line control valve according to Claim 3, **characterized in that** planes of sound coupling surfaces (12, 13) of coupling elements (10, 11) are arranged parallel to one another.

5. Line control valve according to Claim 3 or 4, **characterized in that** sound coupling surfaces (12, 13) of coupling elements (10, 11) are arranged offset from one another.

6. Line control valve according to either of Claims 1 and 2, **characterized in that** sound coupling surfaces (12, 13) of coupling elements (10, 11) are situated on the same side of the housing (1).

7. Line control valve according to Claim 6, **characterized in that** planes of sound coupling surfaces (12, 13) of coupling elements (10, 11) intersect one another at an angle which depends on the irradiation angle.

8. Line control valve according to one of Claims 1 to 7, **characterized in that** the housing (1) has connection elements (2, 3).

9. Line control valve according to one of Claims 1 to 8, **characterized in that** the housing (1) has a housing neck (4).

10. Line control valve according to Claim 8 or 9, **characterized in that** the housing neck (4) is arranged asymmetrically between the connection elements (2, 3).

11. Method for determining and/or monitoring the flow rate of a medium in a line control valve according to one of Claims 1 to 10,
wherein the ultrasound signals transmitted through the medium by the first ultrasound sensor (14) are received by the further ultrasound sensor (15), and the ultrasound signals transmitted through the medium by the further ultrasound sensor (15) are received by the first ultrasound sensor (14), wherein the signals are evaluated by at least one control/evaluation unit, which determines the volumetric and/or mass flow rate of the medium in the line control valve.

## Revendications

1. Robinet muni d'un boîtier (1), dans lequel est agencé un corps d'arrêt (9), et d'un dispositif de mesure de débit, le dispositif comprenant un premier capteur ultrasonore (14) et au moins un autre capteur ultrasonore (15), qui sont agencés au niveau du boîtier (1) ,
**caractérisé en ce que**
le robinet est un robinet de régulation de canalisation et les capteurs ultrasonores (14, 15) sont agencés au niveau d'éléments de couplage (10, 11) configurés sous la forme d'une protubérance, d'un creux ou d'une protubérance qui comprend un creux intérieur, sur le boîtier (1), les éléments de couplage (10, 11) comprenant des surfaces de couplage sonore (12, 13), la surface de couplage sonore (12, 13) d'au moins un élément de couplage (10, 11) étant orientée en biais par rapport à l'axe d'écoulement (18), un angle (19, 20) de plus de 30° et de moins de 40° existant entre les normales (16, 17) des surfaces de couplage sonore (12, 13) et l'axe d'écoulement (18).

2. Robinet de régulation de canalisation selon la revendication 1, **caractérisé en ce que** l'élément de couplage (10, 11) est configuré d'un seul tenant avec le boîtier (1).

3. Robinet de régulation de canalisation selon l'une quelconque des revendications 1 à 2, **caractérisé en ce que** les surfaces de couplage sonore (12, 13) d'éléments de couplage (10, 11) sont agencées au niveau de côtés extérieurs opposés l'un à l'autre du boîtier (1).

4. Robinet de régulation de canalisation selon la revendication 3, **caractérisé en ce que** des plans de surfaces de couplage sonore (12, 13) d'éléments de couplage (10, 11) sont agencés en parallèle les uns aux autres.

5. Robinet de régulation de canalisation selon la revendication 3 ou 4, **caractérisé en ce que** des surfaces de couplage sonore (12, 13) d'éléments de couplage (10, 11) sont agencées en décalage les unes par rapport aux autres.

6. Robinet de régulation de canalisation selon l'une quelconque des revendications 1 à 2, **caractérisé en ce que** des surfaces de couplage sonore (12, 13) d'éléments de couplage (10, 11) sont situées sur le même côté du boîtier (1).

7. Robinet de régulation de canalisation selon la revendication 6, **caractérisé en ce que** des plans de surfaces de couplage sonore (12, 13) d'éléments de couplage (10, 11) se coupent à un angle dépendant de l'angle d'incidence.

8. Robinet de régulation de canalisation selon l'une quelconque des revendications 1 à 7, **caractérisé en ce que** le boîtier (1) comprend des éléments de raccordement (2, 3).

9. Robinet de régulation de canalisation selon l'une quelconque des revendications 1 à 8, **caractérisé en ce que** le boîtier (1) comprend un col de boîtier (4).

10. Robinet de régulation de canalisation selon la revendication 8 et 9, **caractérisé en ce que** le col de boîtier (4) est agencé de manière asymétrique entre les éléments de raccordement (2, 3).

11. Procédé de détermination et/ou de surveillance du débit d'un milieu dans un robinet de régulation de canalisation selon l'une quelconque des revendications 1 à 10, dans lequel les signaux ultrasonores envoyés par le premier capteur ultrasonore (14) au travers du milieu sont reçus par l'autre capteur ultrasonore (15) et les signaux ultrasonores envoyés par l'autre capteur ultrasonore (15) au travers du milieu sont reçus par le premier capteur ultrasonore (14), les signaux étant évalués avec au moins une unité de réglage/évaluation, qui détermine le débit volumique et/ou massique du milieu dans le robinet de régulation de canalisation.
